Europäisches Patentamt

European Patent Office

Office européen des brevets

(19)

(11) Veröffentlichungsnummer: **0 196 371 B1**

# EUROPÄISCHE PATENTSCHRIFT

(12)

(45) Veröffentlichungstag der Patentschrift: **29.05.91**

(51) Int. Cl.⁵: **G08B 3/10, H04B 5/04**

(21) Anmeldenummer: **85115784.2**

(22) Anmeldetag: **11.12.85**

(54) **Verfahren zum drahtlosen übertragen eines Anrufsignals.**

(30) Priorität: **03.04.85 DE 3512154**

(43) Veröffentlichungstag der Anmeldung:
**08.10.86 Patentblatt 86/41**

(45) Bekanntmachung des Hinweises auf die
Patenterteilung:
**29.05.91 Patentblatt 91/22**

(84) Benannte Vertragsstaaten:
**AT CH DE FR GB LI NL**

(56) Entgegenhaltungen:
**EP-A- 0 074 940**
**EP-A- 0 086 254**
**EP-A- 0 110 506**
**GB-A- 2 068 616**

(73) Patentinhaber: **ROBERT BOSCH GMBH**
**Postfach 50**
**W-7000 Stuttgart 1(DE)**

(72) Erfinder: **Lange, Wolfgang**
**Am Hüllepfuhl 14**
**W-1000 Berlin 20(DE)**

(74) Vertreter: **Schmidt, Hans-Ekhardt**
**Robert Bosch GmbH Geschäftsbereich Elektronik Patent- und Lizenzabteilung Forckenbeckstrasse 9-13**
**W-1000 Berlin 33(DE)**

## Beschreibung

### Stand der Technik

Die Erfindung geht von einem Verfahren nach dem Oberbegriff des Patentanspruchs 1 aus.

Es ist schon bekannt (BOSCH-Firmendruckschrift "Technische Informationen Funktechnik", 1983, Quittungsrufempfänger QRE82 - QRE162 - QRE452), einen bei einem Fahrzeug-Sprechfunkgerät eingehenden Anruf einer Person mitzuteilen, die sich nicht in unmittelbarer Nähe des Fahrzeuges aufhält. Das Fahrzeug-Sprechfunkgerät beantwortet automatisch jeden Anruf durch Aussenden eines für das betreffende Sprechfunkgerät charakteristischen Quittungsrufes, der mittels eines von der genannten Person mitgeführten Quittungsrufempfängers empfangen und zum Beispiel in ein akustisches Signal umgesetzt werden kann. Nachteilig ist bei dem bekannten Verfahren, daß es nur bei Sprechfunkgeräten mit Quittungsruf einsetzbar ist und daß es nur bei Frequenzen arbeitet, die bestimmten Benutzergruppen vorbehalten sind.

Es ist weiterhin ein Pager bekannt (EP-A-0 110 506), der zum Empfangen eines von einem Funksender ausgestrahlten Trägers vorgesehen ist, der mit einem Paging-Signal moduliert ist. Darüber hinaus ist ein schnurloses Telefon bekannt (EP-A-0 074 940), bei dem zwischen einem Handapparat und einem Basisapparat drahtlos Informationen ausgetauscht werden.

### Vorteile der Erfindung

Das erfindungsgemäße Verfahren mit den kennzeichnenden Merkmalen des Patentanspruchs 1 hat den Vorteil, daß es insbesondere zur Weiterleitung von elektrischen, optischen oder akustischen Anrufsignalen geeignet ist und in einem Frequenzbereich arbeitet, in welchem schwache, nur den Nahbereich erfassende Funksignale den normalen Funkverkehr nicht stören.

Durch die in den Unteransprüchen aufgeführten Maßnahmen sind vorteilhafte Weiterbildungen und Verbesserungen des im Patentanspruch 1 angegebenen Verfahrens möglich. Besonders vorteilhaft ist ein erfindungsgemäßes Verfahren, bei dem der Funksender mit mindestens zwei Signalgebern gekoppelt ist, für jeden Signalgeber ein anderes Datentelegramm vorgesehen ist und der Empfänger für die Auswertung beider Datentelegramme eingerichtet ist und bei jedem Empfang des ersten Datentelegramms ein erstes Folgesignal und bei dem Empfang des zweiten Datentelegramms ein zweites Folgesignal abgibt. Auf diese Weise ist es möglich, einem einen Rufempfänger tragenden Benutzer nicht nur zum Beispiel das Vorliegen eines Telefonanrufs, sondern auch das Ansprechen einer Haustürklingel mitzuteilen, wobei der Benutzer des Rufempfängers die beiden verschiedenen Anrufsignale durch verschiedene optische oder akustische Folgesignale unterscheiden kann.

### Zeichnung

Ausführungsbeispiele der Erfindung sind in der Zeichnung an Hand mehrerer Figuren dargestellt und in der nachfolgenden Beschreibung näher erläutert. In der Zeichnung zeigt

Fig. 1   ein Blockschaltbild eines erfindungsgemäßen Senders in einer ersten Ausführungsform,

Fig. 2   ein Blockschaltbild eines erfindungsgemäßen Empfängers in einer ersten Ausführungsform,

Fig. 3   ein Blockschaltbild eines erfindungsgemäßen Senders in einer zweiten Ausführungform und

Fig. 4   eine perspektivische Ansicht eines erfindungsgemäßen Rufempfängers mit zugehörigem Ladegerät.

### Beschreibung der Erfindung

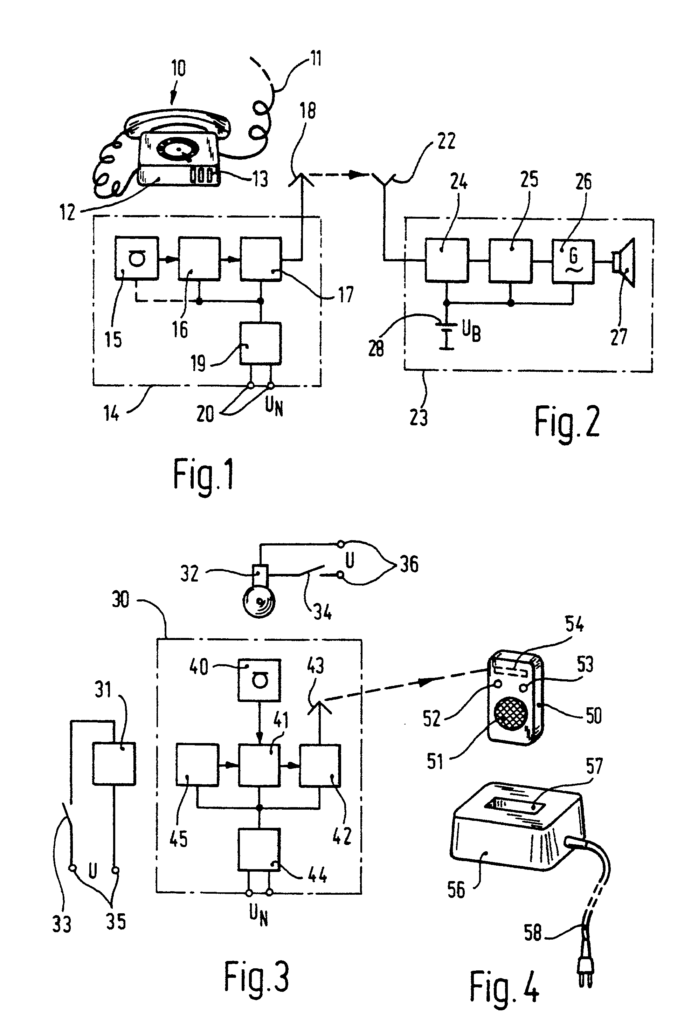

Das Blockschaltbild in Fig. 1 betrifft die Senderseite und das Blockschaltbild gemäß Fig. 2 die Empfängerseite einer erfindungsgemäßen Vorrichtung zum drahtlosen Übertragen von Anrufsignalen. In Fig. 1 bezeichnet 10 einen Fernsprechapparat, der über eine Teilnehmerleitung 11 mit dem Fernsprechnetz in Verbindung steht. Der Fernsprechapparat weist vorzugsweise an seiner vorderen Stirnseite 12 Schlitze 13 zum Durchtritt der von einem Wecker innerhalb des Fernsprechapparates abgegebenen akustischen Anrufsignale auf. Ein möglichst in unmittelbarer Nähe des Fernsprechapparates angeordneter Funksender 14 enthält ein Mikrofon 15 zum Aufnehmen der aus den Schlitzen 13 austretenden Anrufsignale. Das Mikrofon ist über einen Datentelegrammgeber 16 mit einem Sendeteil 17 verbunden, an dessen Ausgang eine Sendeantenne 18 angeschlossen ist. Der Sender 14 enthält noch ein Netzteil 19, das Anschlüsse 20 zum Zuführen einer Netzspannung $U_N$ aufweist.

In Fig. 2 bezeichnet 22 eine Empfangsantenne, die mit dem Eingang eines tragbaren Rufempfängers 23 bzw. mit dessen Empfangsteil 24 verbunden ist. An das Empfängerteil schließt sich ein Auswerter 25 für Datentelegramme und an den Auswerter ein Tongenerator 26 an, der mit einem Lautsprecher 27 verbunden ist. Die Stromversorgung für den Rufempfänger 23 übernimmt eine in dem Rufempfänger untergebrachte Batterie 28 mit der Spannung $U_B$.

Die Wirkungsweise des vorstehend beschriebenen Funksenders und Rufempfängers ist folgende.

Trifft über die Teilnehmerleitung 11 ein elektrisches Anrufsignal ein, so wird dieses mittels des in dem Fernsprechapparat enthaltenen Weckers in ein akustisches Anrufsignal umgewandelt, das durch die Schlitze 13 abgestrahlt wird. Befindet sich der Fernsprechteilnehmer in der Nähe des Fernsprechapparates 10, so wird er sich in der üblichen Weise durch Abheben des Handapparates melden. Befindet er sich dagegen nicht in der Nähe des Fernsprechapparates und trägt er den Empfänger 23 bei sich, so geschieht folgendes. Das in der Nähe der Schlitze 13 des Fernsprechapparates 10 vorhandene Mikrofon 15 des Senders 14 nimmt das akustische Anrufsignal auf und wandelt es in ein elektrisches Signal um, das den Datentelegrammgeber 16 zur Abgabe eines bestimmten, für den Sender charakteristischen digitalen Datentelegramms veranlaßt. In dem Sendeteil 17 moduliert das Datentelegramm eine dem Längstwellenbereich angehörende Trägerfrequenz von ≤ 10 KHz vorzugsweise durch Frequenzumtastung. Die modulierte Trägerfrequenz wird in dem Sendeteil 17 verstärkt und über die Sendeantenne 18 abgestrahlt. Zur Stromversorgung des Senders sind die Anschlüsse 20 des Netzteils 19 vorzugsweise mit dem Wechselstromnetz verbunden. Die Wechselspannung wird mittels des Netzteils 19 in eine Gleichspannung umgewandelt.

Der tragbare Rufempfänger 23 nach Fig. 2 empfängt den modulierten Träger mittels seiner Empfangsantenne 22, die mit dem Eingang des Empfangsteils 24 verbunden ist. In dem Empfangsteil findet eine Hochfrequenzverstärkung und Demodulation statt. Mit dem Auswerter 25 wird festgestellt, ob das soeben empfangene Datentelegramm tatsächlich dem von dem Sender 14 ausgestrahlten Datentelegramm oder einem anderen bzw. fehlerhaft übertragenen Datentelegramm entspricht. Zu diesem Zweck findet in dem Auswerter 25 ein Vergleich zwischen dem empfangenen Datentelegramm und einem in dem Auswerter gespeicherten und für den Sender 14 bzw. den Fernsprechapparat 10 charakteristischen Datentelegramm statt. Liegt eine Übereinstimmung zwischen beiden Datentelegrammen vor, so gibt der Auswerter 25 an den Tongenerator 26 ein Schaltsignal ab, durch das dieser eingeschaltet wird und eine bestimmte Tonfrequenz erzeugt, die der Lautsprecher 26 wiedergibt und den Benutzer des Rufempfängers auf das Vorliegen eines Telefonanrufs aufmerksam macht.

Um eine fehlerhafte Übertragung von Datentelegrammen zu vermeiden, reagiert der Datentelegrammgeber 16 vorzugsweise erst dann auf ein Anrufsignal des Mikrofons 15, wenn mehrere Anrufsignale aufgenommen worden sind.

Für die drahtlose Übertragung zwischen dem Sender 14 und dem Rufempfänger 23 genügen in der Praxis Sendeleistungen von ca. 250 mW. Damit werden die Räume einer Wohnung oder eines mehrstöckigen Hauses versorgt, vorausgesetzt, daß der Sender an einem zentralen Ort installiert wird und die Entfernung zum Empfänger nicht größer als 15 m ist. Die Versorgung größerer Gebäude oder zum Beispiel eines zu einem Haus gehörenden Gartens wäre mit einem parallel betriebenen zweiten Sender möglich.

In dem in Fig. 3 gezeigten Ausführungsbeispiel eines anderen Senders 30 sind diesem Sender zwei verschiedene Rufsignalgeber zugeordnet, nämlich eine optische Signalquelle 31, das ist vorzugsweise ein Infrarotsender, und eine elektrische Klingel, das ist zum Beispiel eine Haustürglocke. Die optische Signalquelle 31 und die elektrische Klingel 32 liegen in einem durch je einen Schalter 33, 34 einschaltbaren Stromkreis, dessen Anschlüsse 35, 36 an je einer Spannung U liegen.

Der andere Sender 30 enthält ebenso wie der Sender 14 nach Fig. 1 ein Mikrofon 40, einen Datentelegrammgeber 41, ein Sendeteil 42, eine Sendeantenne 43 und ein Netzteil 44. Zusätzlich enthält der andere Sender 30 einen optischen Empfänger 45, das ist vorzugsweise ein Infrarotempfänger, der ebenfalls mit dem Datentelegrammgeber 41 verbunden ist. Während das Mikrofon 40 möglichst in der Nähe der elektrischen Klingel 32 angebracht ist, ist der optische Empfänger 45 in der Nähe der optischen Signalquelle 31 angeordnet. Die Infrarotübertragung eignet sich insbesondere zur Objektsicherung, wobei entweder, wie in Fig. 3 gezeigt, der Schalter 33 ein Türschalter sein kann oder die optische Signalquelle 31 dauernd mit Strom versorgt wird und in Verbindung mit dem Empfänger 45 als Lichtschranke arbeitet.

Die Wirkungsweise des vorstehend beschriebenen Senders nach Fig. 3 ist folgende.

Gibt die optische Signalquelle 31 ein Anrufsignal ab, wobei der Schalter 33 geschlossen wäre, so wandelt der optische Empfänger 45 das optische Signal in ein elektrisches Signal um, welches in dem Datentelegrammgeber 41 ein erstes Datentelegramm auslöst, das als Modulation eines Trägers über die Sendeantenne 43 abgestrahlt wird. Gibt die elektrische Klingel 32 ein Klingelsignal ab, wobei der Schalter 34 geschlossen wäre, so wird das Schallsignal mittels des Mikrofons 40 in ein elektrisches Signal umgewandelt, das in dem Datentelegrammgeber 41 ein zweites, sich von dem ersten unterscheidendes Datentelegramm auslöst. Das zweite Datentelegramm wird ebenfalls über das Sendeteil 42 und die Sendeantenne 43 abgestrahlt. Ein tragbarer Rufempfänger 50 (Fig. 4) weist in diesem Falle einen Auswerter auf, in welchem die beiden dem Sender 30 zugeordneten Datentelegramme gespeichert sind. Je nachdem, welches Datentelegramm von dem Rufempfänger 50 empfangen wird, steuert der Auswerter den Tongenerator auf eine erste oder eine zweite Tonfrequenz um, die von dem Lautsprecher 51 wiedergegeben wird. Die Anzeige eines übertragenen Anrufs kann auch in der Weise erfolgen, daß der Rufempfänger 50 zwei optische Anzeigeelemente 52, 53 aufweist, die von dem Auswerter angesteuert werden. Der Rufempfänger 50 nach Fig. 4 enthält in seinem Innern als Empfangsantenne eine Ferritantenne 54; er wird aus einem in dem Empfängergehäuse enthaltenen Akkumulator gespeist. Zum Aufladen bzw. Nachladen des Akkumulators dient ein Ladegerät 56 mit einer Vertiefung 57 zur teilweisen Aufnahme des Rufempfängers 50. Die Übertragung des für die Aufladung benötigten Stromes erfolgt auf induktivem Wege. Zu diesem Zweck weist das Ladegerät ein mit dem Wechselstromnetz verbundenes Netzanschlußkabel 58 auf. In dem Ladegerät wird die Netzwechselspannung in eine kleinere Spannnung transformiert, die auf den Empfänger 50 übertragen und dort gleichgerichtet wird.

Die optischen Anzeigeelemente 52, 53 des Rufempfängers 50 können gegebenenfalls durch ein LED- oder LCD-Display gebildet werden. Da in Nebenstellenanlagen oft unterschiedliche Anrufsignale, zum Beispiel für Hausgespräche und Amtsgespräche, verwendet werden, kann der Sender 30 derart abgewandelt werden, daß in ihm unterschiedliche Datentelegramme gebildet werden, die mit dem vorgenannten Display ebenfalls angezeigt werden können.

In den Ausführungsbeispielen nach den Fig. 1 und 3 wird der Schall der Anrufsignale durch ein Mikrofon 15, 40 aufgenommen. Es kann jedoch auch vorteilhaft sein, anstelle des Mikrofons ein mit dem Gehäuse des Fernsprechapparates 10 unmittelbar zu verbindendes Körperschallmikrofon oder eine Telefonspule zu verwenden, die mit der Spule des in dem Fernsprechapparat enthaltenen Weckers induktiv gekoppelt ist.

**Ansprüche**

1.    Verfahren zum drahtlosen Übertragen eines Anrufsignals, das ein Signalgeber (31, 32) abgibt und ein mit dem Signalgeber gekoppelter Funksender (30) an einen dem Funksender fest zugeordneten tragbaren Rufempfänger (50) weiterleitet, der dadurch ein Folgesignal abgibt, **dadurch gekennzeichnet**, daß das Anrufsignal drahtlos von einer Empfangseinrichtung (40, 45) des in der Nähe des Signalgebers sich befindenden Funksenders (30) aufgenommen wird, daß die Empfangseinrichtung (40, 45) in dem Funksender (30) ein für den betreffenden Signalgeber (32) charakteristisches Datentelegramm auslöst, welches der Funksender als ein einen Träger des Längstwellenbereiches, also ≤ 10 KHz, in der Frequenz modulierendes Signal aussendet, und daß der Rufempfänger (23) jedes durch Demodulation des frequenzmodulierten Signals erhaltene Datentelegramm mit dem in einem Auswerter (25) des Rufempfängers gespeicherten, für den zugehörigen Signalgeber charakteristischen Datentelegramm vergleicht und im Falle des Übereinstimmens beider Datentelegramme in dem Rufempfänger das Folgesignal auslöst.

2.    Verfahren nach Anspruch 1, dadurch gekennzeichnet, daß der Funksender (30) mit mindestens zwei Signalgebern (31, 32) gekoppelt ist, daß für jeden Signalgeber ein anderes Datentelegramm vorgesehen ist und daß der Empfänger (50) für die Auswertung beider Datentelegramme eingerichtet ist und bei dem Empfang des ersten Datentelegramms ein erstes Folgesignal und bei dem Empfang des zweiten Datentelegramms ein zweites Folgesignal abgibt.

3.    Verfahren nach Anspruch 1 oder 2, dadurch gekennzeichnet, daß das Datentelegramm aus einem Synchronteil und einem Datenteil besteht.

4.    Verfahren nach Anspruch 1, 2 oder 3, dadurch gekennzeichnet, daß die Datentelegramme unter Anwendung eines Fehlersicherungskodes und/oder durch wiederholtes Aussenden übertragen werden.

5.    Verfahren nach Anspruch 1, dadurch gekennzeichnet, daß die Frequenzmodulation als Frequenzumtastung ausgeführt wird.

6.    Verfahren nach Anspruch 1 oder 2, dadurch gekennzeichnet, daß der Signalgeber ein Wecker eines Fernsprechapparates (10) ist und daß der Funksender (14) die Anrufsignale entweder galvanisch oder mit einem Mikrofon (15) oder einer Telefonspule auskoppelt.

7.    Verfahren nach Anspruch 1, 2 oder 6, dadurch gekennzeichnet, daß der Funksender (14) aus dem Netz gespeist wird.

8.    Verfahren nach Anspruch 1 oder einem der folgenden, dadurch gekennzeichnet, daß der Rufempfänger (23) aus einer in dem Empfänger vorhandenen Stromquelle (28) gespeist wird.

9. Verfahren nach Anspruch 2, dadurch gekennzeichnet, daß der Funkempfänger (50) ein Display zur Anrufanzeige verschiedener Anrufe aufweist.

10. Verfahren nach einem der Ansprüche 1 bis 9, dadurch gekennzeichnet, daß der Rufempfänger (50) als Empfangsantenne eine Ferritantenne (54) enthält.


**Claims**

1. A method of transmitting, via a wireless link, a call signal which is supplied by a signal generator (31, 32) and is transmitted by a radio transmitter (30), coupled to the signal generator, to a portable call receiver (50) which is fixedly associated with the radio transmitter and which thereby supplies a sequence signal, characterised in that the call signal is received, via a wireless link, by a receiving device (40, 45) of the radio transmitter (30) located in the vicinity of the signal generator, that the receiving device (40, 45) in the radio transmitter (30) triggers a data telegram which is characteristic of the relevant signal generator (32) and which the radio transmitter transmits as a signal modulating the frequency of a carrier of the very low frequency range, that is, $\leq$ 10 KHz, and that the call receiver (23) compares each data telegram, obtained by demodulation of the frequency-modulated signal, with the data telegram which is stored in an evaluator (25) of the call receiver and which is characteristic of the associated signal generator, and triggers the sequence signal if the two data telegrams in the call receiver are identical.

2. A method as claimed in claim 1, characterised in that the radio transmitter (30) is coupled to at least two signal generators (31, 32), that a different data telegram is provided for each signal generator, and that the receiver (50) is equipped for the evaluation of the two data telegrams and supplies a first sequence signal upon receiving the first data telegram and supplies a second sequence signal upon receiving the second data telegram.

3. A method as claimed in claim 1 or 2, characterised in that the data telegram comprises a synchronizing part and a data part.

4. A method as claimed in claim 1, 2 or 3, characterised in that the data telegrams are transmitted with the use of a an error safety code and/or by repeated transmission.

5. A method as claimed in claim 1, characterised in that the frequency modulation is performed by frequency-shift keying.

6. A method as claimed in claim 1 or 2, characterised in that the signal generator is a call bell of a telephone apparatus (10), and that the radio transmitter (14) decouples call signals either galvanically or with a microphone (15) or a telephone coil.

7. A method as claimed in claim 1, 2 or 6, characterised in that the radio transmitter (14) is fed from the mains.

8. A method as claimed in claim 1 or in one of the claims following claim 1, characterised in that the call receiver (23) is fed from a source of current (28) provided in the receiver.

9. A method as claimed in claim 2, characterised in that the radio receiver (50) has a display for displaying various calls.

10. A method as claimed in one of the claims 1 to 9, characterised in that the call receiver (50) includes a ferrite antenna (54) as the receiving antenna.


**Revendications**

1. Procédé pour la transmission sans fil d'un signal d'appel, qu'émet un transmetteur de signaux (31, 32) et que transmet un émetteur radio (30) couplé avec le transmetteur de signaux à un récepteur d'appels (50) portatif associé de manière fixe à un émetteur radio qui émet un signal de séquence caractérisé en ce que le signal d'appel est reçu sans fil par un dispositif de réception (40, 45) de l'émetteur radio (30) se trouvant à proximité du transmetteur de signaux, en ce que le dispositif de réception (40, 45) dans l'émetteur radio (30) déclenche un télégramme de données caractéristique pour le transmetteur de signaux (32) concerné, que l'émetteur radio émet comme un signal modulant la fréquence d'une porteuse de la gamme d'ondes très longue, soit $\leq$ 10 KHz et en ce que le récepteur d'appels (23) compare chaque télégramme de données obtenu par démodulation du signal modulé en fréquence à un télégramme de données caractéristique du transmetteur de signaux concerné qui est mémorisé dans un évaluateur (25) du récepteur d'appels et, en cas de concordance des deux télégrammes de données, déclenche le signal de séquence dans le récepteur d'appels.

2. Procédé selon la revendication 1, caractérisé en ce que l'émetteur radio (30) est couplé avec au moins deux transmetteurs de signaux (31, 32), en ce qu'un autre télégramme de données est prévu pour chaque transmetteur de signaux et en ce que le récepteur (50) est équipé pour l'évaluation des deux télégrammes de données et émet, lors de la réception du premier télégramme de données, un premier signal de séquence et, lors de la réception du deuxième télégramme de données, un deuxième de séquence.

3. Procédé selon la revendication 1 ou 2, caractérisé en ce que le télégramme de données est constitué par une partie synchrone et par une partie de données.

4. Procédé selon la revendication 1, 2 ou 3, caractérisé en ce que les télégrammes de données sont transmis en utilisant un code de sécurité contre les erreurs et/ou en répétant l'émission.

5. Procédé selon la revendication 1, caractérisé en ce que la modulation de fréquence est exécutée sous forme de modulation par déplacement de fréquence.

6. Procédé selon la revendication 1 ou 2, caractérisé en ce que le transmetteur de signaux est une sonnerie d'un poste téléphonique (10) et en ce que l'émetteur radio (14) déclenche les signaux d'appel, soit galvaniquement, soit avec un microphone (15), soit avec une bobine de téléphone.

7. Procédé selon la revendication 1, 2 ou 6, caractérisé en ce que l'émetteur radio (14) est alimenté par le secteur.

8. Procédé selon la revendication ou une des suivantes, caractérisé en ce que le récepteur d'appels (23) est alimenté par une source de courant (28) se trouvant dans le récepteur.

9. Procédé selon la revendication 2, caractérisé en ce que le récepteur radio (50) présente une visualisation pour la signalisation d'appels différents.

10. Procédé selon l'une des revendications 1 à 9, caractérisé en ce que le récepteur d'appels (50) contient une antenne de ferrite (54) comme antenne réceptrice.

Fig.1

Fig.2

Fig.3

Fig.4